# EUROPÄISCHE PATENTSCHRIFT

(11) **EP 3 318 490 B1**
(45) Veröffentlichungstag und Bekanntmachung des Hinweises auf die Patenterteilung: **12.06.2019**
(21) Anmeldenummer: 17001691.9
(22) Anmeldetag: 13.10.2017
(51) Int. Cl.: B64D 1/06, B64D 1/08, F41F 3/06, F42B 10/14, F42B 10/12

(54) **VERFAHREN ZUM ABWERFEN EINES FLUGKÖRPERS**
METHOD FOR EJECTING A MISSILE
PROCÉDÉ D'ÉJECTION D'UN MISSILE

(30) Priorität: 03.11.2016 DE 102016013113
(43) Veröffentlichungstag der Anmeldung: 09.05.2018
(73) Patentinhaber: Diehl Defence GmbH & Co. KG, 88662 ÜBERLINGEN (DE)
(72) Erfinder: Fisch, Peter Gerd, 88662 Überlingen (DE); Lindenau, Bernd, 88214 Ravensburg (DE); Weltin, Ingo, 88682 Salem (DE)
(74) Vertreter: Diehl Patentabteilung

(56) Entgegenhaltungen:
- DE-A1- 3 432 614
- DE-T2- 60 302 281
- GB-A- 2 274 904
- US-A- 4 667 899
- US-A- 4 826 105
- US-A1- 2008 111 020
- US-A1- 2009 127 378
- US-B1- 6 176 167

## Beschreibung

Die Erfindung betrifft ein Verfahren zum Abwerfen eines Flugkörpers, insbesondere eines Luft-Seeziel-Flugkörpers, bei dem der Flugkörper unter einer fliegenden Plattform während eines Tragflugs hängt und der Flugkörper von der Plattform abgeworfen wird.

Es ist üblich, Flugkörper beispielsweise mit einer Koppeleinheit zu versehen, mit welcher sie an einer zugehörigen Aufhängung an der Unterseite einer fliegenden Plattform vor dem Start der fliegenden Plattform lösbar befestigbar sind. Bei der Unterseite kann es sich um die dem Boden, auf welchem die fliegende Plattform vor ihrem Start steht, zugewandte Unterseite des Rumpfes oder einer Tragfläche oder eines Flügels der fliegenden Plattform handeln. Während des Fluges der fliegenden Plattform kann der unter der Plattform hängende Flugkörper dann mit seiner Koppeleinrichtung aus der Aufhängung ausgeklinkt werden, um vom Tragflug an der fliegenden Plattform in den Eigenflug zu wechseln. Je nach Plattform ist es jedoch auch möglich, dass der Flugkörper selbst über keine explizite Koppeleinrichtung verfügen muss, wenn die Plattform über eine entsprechende Halterung verfügt, die Aufhängung und Koppeleinheit in sich vereint. Eine derartige Halterung ist bspw. in der DE 10 2010 008 729 A1 gezeigt. Aus der US 6 176 167 B1 ist eine Einrichtung bekannt, mit welcher an der Unterseite eines Helikopters eine Bewaffnung, wie beispielsweise Flugkörper befestigbar sind. Die Flugkörper weisen in ihrem Heckbereich vier Flügel in X-Stellung auf, die sich in ihrem an der Einrichtung befestigten Zustand allesamt in einem eingeklappten Zustand befinden, damit der Helikopter eine entsprechende Bodenfreiheit hat. Ein Ausklappen der Flügel ist nach einer Freigabe der Flugkörper von der Einrichtung vorgesehen.

Beim Verschuss von Flugkörpern aus Rohren oder Mehrfachwerfern ist es bekannt, die Flügel der Flugkörper zur Lagerung im Rohr bzw. Werfer in einer Stauposition vorzusehen und diese erst nach einem Abschuss auszuklappen bzw. zu entfalten. Solche aus einem Rohr oder Werfer verschießbare, mit entsprechenden Flügeln ausgestattete Flugkörper sind bspw. aus der GB 2 274 904 A, der US 2008/111020 A1 und der US 2009/127378 A1 bekannt.

Beim Abwurf von schweren Flugkörpern von einer fliegenden Plattform, wie einem Hubschrauber oder einem Flugzeug, besteht die Gefahr, dass der Flugkörper beim Abwurf durch unkontrollierte Bewegungen mit der fliegenden Plattform kollidiert und diese beschädigt.

Es ist daher eine Aufgabe der Erfindung, ein sicheres Verfahren zum Abwerfen eines Flugkörpers von einer fliegenden Plattform anzugeben.

Die Aufgabe wird durch ein Verfahren gemäß den Merkmalen von Patentanspruch 1 gelöst. Der Flugkörper ist dabei während eines Tragflugs über eine am Flugkörperrumpf befindliche Koppeleinheit mit einer an der Unterseite der fliegenden Plattform befindlichen Aufhängung verbunden und hängt unter der fliegenden Plattform. Während des Tragflugs wird zumindest ein auf der der Koppeleinheit abgewandten Hälfte des Flugkörperrumpfes angeordneter Flügel in einer Tragflugstellung gehalten, in welcher seine Ausdehnung in radiale Richtung - bezogen auf den Flugkörperrumpf - kleiner als diejenige zumindest eines auf der der Koppeleinheit zugeordneten Hälfte des Flugkörperrumpfes angeordneten Flügels ist. Zum Übergang des Flugkörpers vom Tragflug in einen Eigenflug wird dieser von der fliegenden Plattform durch Ausklinken der Koppeleinheit aus der Aufhängung gelöst bzw. abgeworfen. Nach dem Abwurf bewegt der Flugkörper den zumindest einen auf der der Koppeleinheit abgewandten Hälfte des Flugkörperrumpfes angeordneten Flügel aus seiner Tragflugstellung in eine Eigenflugstellung, in welcher seine Ausdehnung in radiale Richtung auf die Größe des zumindest einen auf der der Koppeleinheit zugeordneten Hälfte des Flugkörperrumpfes angeordneten, in seiner Größe unverändert gebliebenen Flügels vergrößert ist.

Die Erfindung geht von der Überlegung aus, dass z. B. ein seitlich unter einer fliegenden Plattform, z. B. unter der Tragfläche oder einem Flugzeugflügel eines Flugzeugs, hängender Flugkörper während eines Tragflugs seitlichen Anströmungen ausgesetzt ist, die unter dem Flugkörper deutlich stärker sind als über ihm oder genauer gesagt im Bereich zwischen der Tragfläche bzw. dem Flugzeugflügel und der der Tragfläche bzw. dem Flugzeugflügel zugewandten "oberen" Hälfte des Flugkörpers stärker sind als im Bereich unterhalb der "unteren" Hälfte des Flugkörpers. Hierdurch wird ein Rollmoment auf den Flugkörper ausgeübt. Zudem kann es-je nach Flugkörpergeometrie - auch vorkommen, dass der Flächen-Schwerpunkt des Flugkörpers unterhalb des Masse-Schwerpunkts des Flugkörpers liegt. Hierdurch kann sich eine instabile aerodynamische Konfiguration für eine Flugkörperbewegung nach unten, also bei einem Abwurf ergeben. Wird der Flugkörper von der fliegenden Plattform bzw. einem Flugzeug abgeworfen und fällt entsprechend der Schwerkraft nach unten, so könnte das durch die Strömung aufgebrachte Rollmoment in Verbindung mit der instabilen aerodynamischen Konfiguration dazu führen, dass insbesondere ein Flügel des Flugkörpers, der sich halterungsbedingt während des Tragflugs auf der oberen, der Plattform zugewandten Hälfte des Flugkörperrumpfes befunden hat, beim Abwerfen und Wechsel in den Eigenflug des Flugkörpers an der Plattform anschlägt.

Damit der Flugkörper ohne eine signifikante Rollbewegung eine ihn tragende fliegende Plattform nach einem Ausklinken seiner Koppeleinheit aus einer Aufhängung der fliegenden Plattform oder äquivalent einer Freigabe durch eine entsprechende Halterung der Plattform nach unten verlässt, könnte er mit einem aktiven Flugregelungssystem bestückt werden, das durch Lenkbewegungen der Flügel den Flugkörper in seiner Fluglage hält. Ein aktives Flugregelungssystem benötigt eine komplexe Flugregelung, die aufgrund der hohen Sicherheitsanforderungen für den Waffenabgang von der Plattform nicht ausfallen darf. Um diese Sicherheitsanforderungen einzuhalten, ist jedoch ein hoher Entwicklungs-, Verifikations- und vor allem Qualifikationsaufwand für das Flugregelungssystem notwendig.

Eine einfache Verbesserung der Situation kann erreicht werden, wenn die aerodynamische Konfiguration des Flugkörpers bei einem Herabfallen bzw. einem Ausklinken oder einer Freigabe verbessert wird. Dies kann durch die Verkleinerung der Ausdehnung des zumindest einen auf der der Koppeleinheit des Flugkörpers bzw. einer Aufhängung oder Halterung der Plattform abgewandten, unteren Hälfte des Flugkörperrumpfes angeordneten Flügels in radialer Richtung bezogen auf den Flugkörperrumpf erreicht werden, da hierdurch der laterale Flächen-Schwerpunkt des Flugkörpers über den Masse-Schwerpunkt des Flugkörpers bewegt wird, wodurch ein stabiles Fallverhalten in der Rollachse in der gewünschten Fluglage erreicht wird. Auch bei äußeren Störeinwirkungen, die eine Auslenkung des Flugkörpers in der Rollachse bewirken, wird durch die verkleinerte Flügelausdehnung in radiale Richtung ein aerodynamischer Einfluss in Richtung auf ein Zurückrollen in die gewünschte Fluglage bewirkt. Nach der Abgangsphase, also bei Erreichen eines ausreichenden . Sicherheitsabstands zwischen der fliegenden Plattform und dem Flugkörper, kann die nominale aerodynamische Konfiguration hergestellt werden, indem der zumindest eine auf der der Koppeleinheit abgewandten Hälfte des Flugkörperrumpfes angeordnete Flügel von seiner Tragflugstellung in seine Eigenflugstellung bewegt wird. Die aktive Flugregelung kann nun auch für diesen Flügel aktiviert werden, und der Flugkörper kann aktiv zum Ziel gesteuert werden.

Die fliegende Plattform ist beispielsweise ein Flugzeug oder ein Drehflügler, unter dessen Tragfläche oder Flügel der Flugkörper, zum Beispiel ein Luft-Seeziel-Flugkörper, während des Tragflugs hängt. Der zumindest eine auf der der Koppeleinheit zugeordneten Hälfte des Flugkörperrumpfes angeordnete Flügel und der zumindest eine auf der der Koppeleinheit abgewandten Hälfte des Flugkörperrumpfes angeordnete Flügel sind zweckmäßigerweise Heckflügel, die insbesondere jeweils mit einem beweglichen Ruder zur Flugsteuerung des Flugkörpers ausgestattet sind.

Der Flugkörper kann ein Luft-Seeziel-Flugkörper sein, der zur Bekämpfung eines Seeziels, wie eines Schiffs, dient. Der Flugkörper bzw. der Luft-Seeziel-Flugkörper kann mit einem Luft atmenden Antriebsmotor ausgerüstet sein, beispielsweise einem Turbinentriebwerk.

Beim Abwerfen fällt der Flugkörper relativ zur fliegenden Plattform nach unten, quasi in Richtung Erdmittelpunkt, in den ersten Momenten insbesondere im Wesentlichen senkrecht nach unten. Vor dem Abwerfen des Flugkörpers, also während seines Tragflugs, verbleibt der zumindest eine auf der der Koppeleinheit abgewandten Hälfte des Flugkörperrumpfes angeordnete Flügel zweckmäßigerweise in seiner Tragflugstellung, die er insbesondere auch bei einer Montage an die fliegende Plattform vor deren Start einnimmt, wodurch eine stabile Transportkonfiguration erreicht wird. Bei der Bewegung des zumindest einen auf der der Koppeleinheit abgewandten Hälfte des Flugkörperrumpfes angeordneten Flügels von seiner Tragflugstellung in seine Eigenflugstellung wird dessen Ausdehnung in radiale Richtung vergrößert. Die Vergrößerung bezieht sich zweckmäßigerweise auf eine Vergrößerung in radiale Richtung, sodass der Flügel in seiner radialen Länge vergrößert wird, sich seine Spitze insofern vom Flugkörperrumpf beim Übergang von der Tragflugstellung in die Eigenflugstellung entfernt. Die Ausdehnung kann auch eine Ausdehnung in lateraler Richtung umfassen, bei der die Spitze beim Übergang von der Tragflugstellung in die Eigenflugstellung auch zur Seite wandert. Die Verkleinerung bzw. Vergrößerung oder ganz allgemein die Veränderung der Ausdehnung insbesondere in radiale Richtung kann durch ein Knicken bzw. ein Klappen, also insbesondere ein Zu- bzw. Aufklappen, des zumindest einen auf der der Koppeleinheit abgewandten Hälfte des Flugkörperrumpfes angeordneten Flügels herbeigeführt werden. Der Flügel kann beispielweise zumindest ein Gelenk oder ein Scharnier umfassen, welches einen die Flügelwurzel umfassenden Teil mit einem die Flügelspitze umfassenden Teil knickbar bzw. klappbar verbindet.

Die Angaben "auf der der Koppeleinheit zugeordneten Hälfte des Flugkörperrumpfes" bzw. "auf der der Koppeleinheit abgewandten Hälfte des Flugkörperrumpfes" beziehen sich auf die Hälfte des Flugkörperrumpfes, die sich symmetrisch um die Koppeleinheit herum erstreckt bzw. die entsprechende andere Hälfte. Die Richtungen nach unten und oben beziehen sich zweckmäßigerweise auf eine Aufhängung des Flugkörpers an der Plattform, wobei der Flugkörper nach oben hin aufgehängt ist und insofern von der Plattform nach unten hängt. In seiner Eigenflugstellung ist der zumindest eine auf der der Koppeleinheit abgewandten Hälfte des Flugkörperrumpfes angeordnete Flügel zweckmäßigerweise symmetrisch zum "oberen", dem auf der der Koppeleinheit zugeordneten Hälfte des Flugkörperrumpfes angeordnetem Flügel, beispielsweise hinsichtlich einer horizontalen Spiegelebene.

Es versteht sich für den Fachmann, dass im Fall einer Konstellation eines Flugkörpers ohne explizite Koppeleinheit in Verbindung mit einer zur Freigabe des Flugkörpers ausgebildeten Halterung, bspw. einer "greifenden" Halterung, an der fliegenden Plattform der Verfahrensschritt des Ausklinkens der Koppeleinheit aus der Aufhängung gleichzusetzen ist mit einer Freigabe des Flugkörpers durch Aktivierung der Halterung, wie bspw. einem Öffnen derselben. Das erfindungsgemäße Verfahren ist folglich nicht auf Flugkörper mit einer Koppeleinheit beschränkt, sondern auch für Flugkörper ohne eine solche in Verbindung mit einer entsprechenden Halterung an einer fliegenden Plattform anwendbar.

Aerodynamisch günstig ist es, wenn der zumindest eine auf der der Koppeleinheit abgewandten Hälfte des Flugkörperrumpfes angeordnete Flügel in seiner Tragflugstellung zumindest teilweise in Richtung auf die fliegenden Plattform zu abgeklappt ist oder zumindest teilweise im Wesentlichen parallel zur fliegenden Plattform (4) abgeklappt ist. Hierbei ist eine Ausrichtung senkrecht nach oben oder schräg nach außen zur Seite in Richtung der fliegenden Plattform bzw. der Tragfläche / Flügel der Plattform vorteilhaft. Der zumindest eine auf der der Koppeleinheit abgewandten Hälfte des Flugkörperrumpfes angeordnete Flügel kann hierfür eine oder mehrere Knickeinheiten / Klappeinheiten, beispielsweise Scharniere, umfassen, entlang derer der Flügel bzw. ein Teil oder mehrere Teile davon nach oben, also auf die fliegende Plattform zu, oder im Wesentlichen parallel zur fliegenden Plattform abgeklappt ist.

Um eine stabile Tragflugstellung des zumindest einen auf der der Koppeleinheit abgewandten Hälfte des Flugkörperrumpfes angeordneten Flügels auch bei Erschütterungen oder starker aerodynamischer Belastung zu erreichen, ist es vorteilhaft, wenn ein von der Flügelwurzel abgewandter Teil des zumindest einen auf der der Koppeleinheit abgewandten Hälfte des Flugkörperrumpfes angeordneten Flügels in seiner Tragflugstellung am Rumpf des Flugkörpers befestigt ist. Befestigt ist insofern zweckmäßigerweise der Teil des Flügels, der bei einer Bewegung von der Tragflugstellung in die Eigenflugstellung bewegt wird, bevorzugt ein Teil, der die Spitze des Flügels umfasst. Zur Befestigung am Rumpf kann ein Befestigungselement vorhanden sein, das bei oder kurz nach dem Abwerfen des Flugkörpers entfernt wird, beispielsweise durch ein Absprengen des Befestigungselements. Der bewegliche Teil des Flügels wird hierdurch freigegeben und kann in die Eigenflugstellung bewegt werden.

Zusätzlich oder alternativ zu einem Ab-/Aufklappen zumindest eines Teils des zumindest einen auf der der Koppeleinheit abgewandten Hälfte des Flugkörperrumpfes angeordneten Flügels besteht die Möglichkeit, dass das Bewegen von der Tragflugstellung in die Eigenflugstellung durch ein Ausfahren zumindest eines Teils des Flügels nach radial außen - bezogen auf den Flugkörperrumpf - bewirkt wird / erfolgt. Das Ausfahren kann durch eine reine Radialbewegung oder durch eine Bewegung mit zusätzlichen anderen Richtungskomponenten erfolgen, beispielsweise mit einer Axialkomponente.

Um eine stabile Tragflugstellung zu erreichen, ist es vorteilhaft, wenn der zumindest eine ausfahrbare Teil in der Tragflugstellung zumindest teilweise innerhalb eines rumpfnäheren Teils des zumindest einen auf der der Koppeleinheit abgewandten Hälfte des Flugkörperrumpfes angeordneten Flügels angeordnet ist und zur Vergrößerung der radialen Ausdehnung aus diesem zumindest teilweise herausfährt. Beispielsweise kann der ausfahrbare Teil die Flügelspitze umfassen und in der Tragflugstellung zumindest teilweise innerhalb eines die Flügelwurzel umfassenden Teils angeordnet sein.

Bei einem Fallen des Flugkörpers, also nach einem Ausklinken oder Freigabe, wird der zumindest eine auf der der Koppeleinheit abgewandten Hälfte des Flugkörperrumpfes angeordnete Flügel deutlichen aerodynamischen Kräften ausgesetzt sein. Insofern kann es sein, dass eine Bewegung des Flügels in seine Eigenflugstellung mit größerer Kraft erfolgen muss. Dies kann in einfacher Weise erreicht werden, wenn ein Antrieb mit einem im Flugkörperrumpf befindlichem Rumpfelement und einem im oder am Flügel befindlichen Flügelelement vorhanden ist, insbesondere ein pneumatischer Antrieb, und das Rumpfelement und das Flügelelement relativ zueinander bewegt werden, wobei zumindest eines der Elemente in einer Kulisse bewegt wird. Hierdurch kann der Flügel kraftvoll in seine Eigenflugstellung bewegt werden.

Durch die Bewegung in der Kulisse kann dem Flügelelement beispielsweise eine Rotation aufgezwungen werden, mit der es einen beweglichen Teil des Flügels in die Eigenflugstellung bewegt oder dreht. Der Antrieb kann ein translatorischer Antrieb sein, wobei die translatorische Bewegung durch die Kulisse in eine beispielsweise rotatorische Bewegung transformiert wird. Ein pneumatischer Antrieb kann durch, eine Druckluftpatrone oder ein pyrotechnisches Element mit Druckluft bzw. Verbrennungsgas versorgt werden. Hierdurch kann eine große Kraft bereitgestellt werden, die den zumindest einen auf der der Koppeleinheit abgewandten Hälfte des Flugkörperrumpfes angeordneten Flügel zuverlässig in seine Eigenflugstellung bewegt.

Um nach dem Abwerfen eine stabile Position des lateralen Flächen-Schwerpunkts gegenüber dem Masse-Schwerpunkt zu erhalten, ist es vorteilhaft, wenn die Bewegung des zumindest einen auf der der Koppeleinheit abgewandten Hälfte des Flugkörperrumpfes angeordneten Flügels in die Eigenflugstellung nach dem Abwerfen des Flugkörpers eine Weile verzögert wird. Insofern ist es vorteilhaft, wenn der zumindest eine auf der der Koppeleinheit abgewandten Hälfte des Flugkörperrumpfes angeordnete Flügel nach dem Abwurf eine vorbestimmte Zeitdauer in der Tragflugstellung verbleibt und nach Ablauf dieser Zeitdauer die Bewegung in die Eigenflugstellung gestartet wird. Eine vorgegebene Zeitdauer ist äquivalent zu einem vorgegebenen Sicherheitsabstand des Flugkörpers von der fliegenden Plattform. Beides kann einfach ineinander umgerechnet werden.

Eine einfache Steuerung der Bewegung in die Eigenflugstellung des zumindest einen auf der der Koppeleinheit abgewandten Hälfte des Flugkörperrumpfes angeordneten Flügels kann erreicht werden, wenn ein Prozess, der die Bewegung des zumindest einen auf der der Koppeleinheit abgewandten Hälfte des Flugkörperrumpfes angeordneten Flügels in die Eigenflugstellung bewirkt, bereits mit dem Abwurf gestartet wird. Hierbei ist es vorteilhaft, wenn der Prozess durch ein mechanisches Verzögerungsglied so lange verzögert wird, dass der zumindest eine auf der der Koppeleinheit abgewandten Hälfte des Flugkörperrumpfes angeordnete Flügel seine Eigenflugstellung erst erreicht, wenn der Flugkörper einen vorgegebenen Abstand zur Plattform erreicht hat. Insbesondere ist es vorteilhaft, wenn die Bewegung in die Eigenflugstellung erst dann begonnen wird, wenn der Flugkörper einen vorgegebenen Abstand zur fliegenden Plattform erreicht hat. Das mechanische Verzögerungsglied ist zweckmäßigerweise so ausgeführt, dass es nach seinem Starten eine vorgegebene Zeitspanne in einer Ruhephase verbleibt und nach der Zeitspanne ein mechanisches Auslösesignal ausgibt, mit dem die Bewegung des Flügels gestartet wird. Hierzu kann das Verzögerungsglied beispielsweise ein mechanisches Uhrwerk umfassen, das nach seinem Start eine Zeit lang läuft und nach diesem Lauf ein Auslösesignal mechanisch triggert. Auf diese Weise kann eine aufwendige Steuerungsprogrammierung unterbleiben, wodurch ein Verifikations- und Qualifikationsaufwand verringert wird.

Weiter ist es vorteilhaft, wenn die mechanische Energie zum Bewegen des zumindest einen auf der Koppeleinheit abgewandten Hälfte des Flugkörperrumpfes angeordneten Flügels von seiner Tragflugstellung in seine Eigenflugstellung von einer Pyroeinheit erzeugt wird. Hierdurch kann genügend Energie zeitgenau und zuverlässig bereitgestellt werden. Die Zündung der Pyroeinheit wird zweckmäßigerweise durch ein mechanisches Verzögerungsglied eine vorbestimmte Zeitdauer verzögert. Beispielsweise wird ein Detonator der Pyroeinheit erst durch das Verzögerungsglied aktiviert, wodurch eine zuverlässige Verzögerung erreicht werden kann.

Eine vorteilhafte Möglichkeit zum Erleichtern der Bewegung des zumindest einen auf der der Koppeleinheit abgewandten Hälfte des Flugkörperrumpfes angeordneten Flügels von seiner Tragflugstellung in seine Eigenflugstellung kann dadurch erreicht werden, dass der Flugkörper nach seinem Abwurf von der fliegenden Plattform ein vorbestimmtes Rollmanöver fliegt, durch das das Bewegen aerodynamisch begünstigt wird. Ein solches Rollmanöver kann beispielsweise mit dem zumindest einen auf der der Koppeleinheit zugeordneten Hälfte des Flugkörperrumpfes angeordneten Flügel gesteuert werden, da dieser nicht von einer Tragflugstellung in eine Eigenflugstellung gebracht werden muss.

In einer vorteilhaften Ausführungsform der Erfindung weist der Flugkörper vier Flügel in X-Stellung auf, wobei zwei der Flügel auf der der Koppeleinheit abgewandten Hälfte des Flugkörperrumpfes angeordnet sind. Diese beiden Flügel werden zweckmäßigerweise nach dem Abwerfen des Flugkörpers von der fliegenden Plattform von ihrer Tragflugstellung in ihre Eigenflugstellung bewegt, in welcher ihre Ausdehnung in radiale Richtung jeweils vergrößert wird, insbesondere auf die Größe der beiden auf der der Koppeleinheit zugeordneten Hälfte des Flugkörperrumpfes angeordneten, in ihrer Größe unverändert gebliebenen Flügel. Hierdurch kann eine besonders stabile aerodynamische Konfiguration bei Abwurf des Flugkörpers erreicht werden. Bevorzugterweise sind die beiden auf der der Koppeleinheit (8) abgewandten Hälfte des Flugkörperrumpfes angeordneten Flügel in ihrer Tragflugstellung aneinander mittels eines Befestigungsmittels befestigt sind, insbesondere im Bereich ihrer Flügelspitzen. Mit dem Abwurf des Flugkörpers kann das Befestigungsmittel gelöst, z.B. pyrotechnisch gesprengt, werden, so dass eine Bewegung der Flügel von ihrer Tragflugstellung in ihre Eigenflugstellung ermöglicht ist.

Weist der Flugkörper zwei auf der der Koppeleinheit abgewandten Hälfte des Flugkörperrumpfes angeordnete Flügel auf, so können diese - bzw. zumindest ein Teil ihrer Flügel - in einer Tragflugstellung, beide nach oben, in Richtung auf die fliegende Plattform zu abgeklappt sein, also jeweils insbesondere relativ zueinander in entgegen gesetzte Richtung nach außen und sie können bei einer Bewegung von der Tragflugstellung in die Eigenflugstellung insbesondere ausschließlich nach unten, also in Richtung von der fliegenden Plattform weg bewegt werden. Eine andere Möglichkeit besteht darin, dass bei zwei auf der der Koppeleinheit abgewandten Hälfte des Flugkörperrumpfes angeordneten Flügeln diese in ihrer Tragflugstellung zumindest teilweise aufeinander zu abgeklappt sind und bevorzugt zumindest teilweise im Wesentlichen parallel zur Plattform ausgerichtet sind. Hierdurch kann eine aerodynamische Belastung auf die Flügel in der Tragflugstellung verringert werden. Zudem können die beiden Flügel in ihrer Tragflugstellung aneinander befestigt werden, sodass eine stabile Verankerung der beweglichen bzw. klappbaren / knickbaren Teile der Flügel erreicht werden kann.

Besonders vorteilhaft anwendbar ist die Erfindung bei einem Flugkörper, insbesondere einem Luft-Seeziel-Flugkörper, der ein Turbinentriebwerk mit einem nach unten gerichteten Lufteinlass aufweist, dessen Lufteinlass sich also auf der der Koppeleinheit abgewandten Hälfte des Flugkörperrumpfes befindet. Um das Turbinentriebwerk zuverlässig starten und betreiben zu können, sollte der Lufteinlass nach unten, also im Fall der Tragflugstellung von der Plattform weg, im Fall der Eigenflugstellung zumindest tendentiell in Richtung Erdmittelpunkt / Schwerkraft weisen, sodass Verbrennungsluft zuverlässig in den Einlass hineingedrückt wird. Wird der Flugkörper beispielsweise durch eine unerwünschte Rollbewegung gedreht, sodass der Lufteinlass nach oben gerichtet ist, kann vor dem Lufteinlass ein Unterdruck entstehen, der zu einem Versagen des Triebwerks führt. Insofern ist es für einen nach unten gerichteten Lufteinlass besonders vorteilhaft, wenn der Flugkörper nach einem Abwurf von der fliegenden Plattform in einer gewünschten Rolllage verbleibt. Das Turbinentriebwerk kann vor, bei oder nach dem Abwurf gestartet werden und erhält stets zuverlässig ausreichend Betriebsluft.

Die Erfindung ist außerdem gerichtet auf einen Flugkörper gemäß den Merkmalen von Patentanspruch 14, insbesondere einen Luft-Seeziel-Flugkörper, mit einer Koppeleinheit zum Halten an der Unterseite einer
fliegenden Plattform befindlichen Aufhängung während eines Tragflugs und mit einem Rudersystem mit zumindest einem auf der der Koppeleinheit zugeordneten Hälfte des Flugkörperrumpfes angeordnetem Flügel und zumindest einem auf der der Koppeleinheit abgewandten Hälfte des Flugkörperrumpfes angeordnetem Flügel. Um eine stabile Rolllage nach einem Abwurf des Flugkörpers von der fliegenden Plattform zu erreichen, wird vorgeschlagen, dass der Flugkörper erfindungsgemäß ein Ausfahrsystem mit zumindest einem Aktuator und einer Steuereinheit aufweist, die dazu eingerichtet ist, den Aktuator derart anzusteuern, dass eine Aktuatorbewegung eine Bewegung des zumindest einen auf der der Koppeleinheit abgewandten Hälfte des Flugkörperrumpfes angeordneten Flügels aus einer Tragflugstellung in eine Eigenflugstellung bewirkt, in der seine Ausdehnung in radiale Richtung vergrößert ist, insbesondere auf die Größe des zumindest einen auf der der Koppeleinheit zugeordneten Hälfte des Flugkörperrumpfes angeordneten, in seiner Größe unverändert gebliebenen Flügels.

Die bisher gegebene Beschreibung vorteilhafter Ausgestaltungen der Erfindung enthält zahlreiche Merkmale, die teilweise in einigen abhängigen Ansprüchen zu mehreren zusammengefasst wiedergegeben sind. Die Merkmale können jedoch zweckmäßigerweise auch einzeln betrachtet und zu sinnvollen weiteren Kombinationen zusammengefasst werden, insbesondere bei Rückbezügen von Ansprüchen, sodass ein einzelnes Merkmal eines abhängigen Anspruchs mit einem einzelnen, mehreren oder allen Merkmalen eines anderen abhängigen Anspruchs kombinierbar ist. Außerdem sind diese Merkmale jeweils einzeln und in beliebiger geeigneter Kombination sowohl mit dem erfindungsgemäßen Verfahren als auch mit der erfindungsgemäßen Vorrichtung gemäß den unabhängigen Ansprüchen kombinierbar. So sind Verfahrensmerkmale auch als Eigenschaften der entsprechenden Vorrichtungseinheit gegenständlich formuliert zu sehen und funktionale Vorrichtungsmerkmale auch als entsprechende Verfahrensmerkmale.

Die oben beschriebenen Eigenschaften, Merkmale und Vorteile dieser Erfindung sowie die Art und Weise, wie diese erreicht werden, werden klarer und deutlicher verständlich in Zusammenhang mit der folgenden Beschreibung der Ausführungsbeispiele, die im Zusammenhang mit den Zeichnungen näher erläutert werden. Die Ausführungsbeispiele dienen der Erläuterung der Erfindung und beschränken die Erfindung nicht auf die darin angegebene Kombination von Merkmalen, auch nicht in Bezug auf funktionale Merkmale.

Es zeigen:
- FIG 1: einen Flugkörper während eines Tragflugs an einer fliegenden Plattform,
- FIG 2: den Flugkörper aus FIG 1 in einer Sicht von vorne,
- FIG 3: den Flugkörper aus FIG 2 mit Flügeln in Eigenflugstellung,
- FIG 4: einen der Flügel in Eigenflugstellung in einer Seitendarstellung,
- FIG 5: einen alternativen Flugkörper mit alternativen Flügeln in Tragflugstellung,
- FIG 6: einen weiteren alternativen Flugkörper mit alternativen Flügeln in Tragflugstellung und
- FIG 7: einen Flügel in einer Seitendarstellung mit einem Teil, der nach radial außen verfahrbar ist.

In den folgenden Ausführungsbeispielen sind im Wesentlichen gleichbleibende Bauteile mit dem gleichen Bezugszeichen beziffert. Zum einfacheren Verständnis sind außerdem gleiche Bauteile in verschiedenen Ausführungsbeispielen mit den gleichen Bezugsziffern und anderen Bezugsbuchstaben bezeichnet, wobei sie identisch zueinander oder mit geringfügigen Unterschieden zueinander sein können, zum Beispiel in Abmessung, Form, Position und/oder Funktion. Wird die Bezugsziffer alleine ohne eine Bezugsbuchstaben erwähnt, so sind die entsprechenden Bauteile aller Ausführungsbeispiele angesprochen.

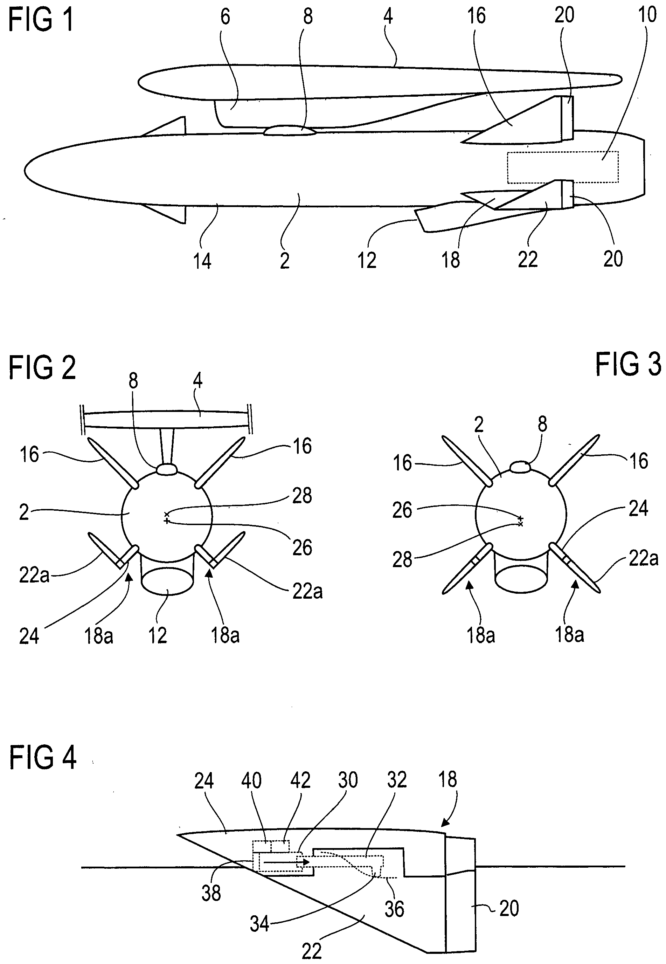

FIG 1 zeigt einen Flugkörper 2, beispielsweise einen Luft-Seeziel-Flugkörper, der unter einer fliegenden Plattform 4 hängt, die in FIG 1 nur schematisch anhand einer Seitendarstellung eines Plattform-Flügels dargestellt ist. Die Plattform 4 hat eine nach unten weisende Aufhängung 6, an der eine Koppeleinheit 8 des Flugkörpers 2 lösbar befestigt ist. Die Koppeleinheit 8 befindet sich über dem Masse-Schwerpunkt des Flugkörpers 2, der unter der Plattform 4 in einem Tragflug gehalten fortbewegt wird.

Der Flugkörper 2 weist im hinteren Bereich ein Turbinentriebwerk 10 auf, zu dessen Versorgung mit Verbrennungsluft der Flugkörper 2 einen Lufteinlass 12 aufweist. Der Lufteinlass 12 ist unterhalb des Flugkörperrumpfs 14 des Flugkörpers 2 bzw. auf der der Koppeleinheit 8 abgewandten Hälfte des Flugkörperrumpfs 14 angeordnet und ist während des Tragflugs durch ein Verschlusselement verschlossen. Ebenfalls im hinteren Bereich umfasst der Flugkörper 2 vier Flügel 16, 18 mit Rudern 20, mithilfe derer der Flugkörper 2 bei einem von der Plattform 4 abgekoppelten Eigenflug in Richtung auf ein Ziel selbständig manövriert.

Aus FIG 1 ist zu sehen, dass der nach unten, von der Plattform 4 weg weisende bzw. der auf der der Koppeleinheit 8 abgewandten Hälfte des Flugkörperrumpfes 14 angeordnete Flügel 18 einen abgeklappten Teil 22 aufweist, in FIG 1 beispielhaft nach oben in Richtung auf die Plattform 4 zu, sodass die Ausdehnung des Flügels 18 nach unten hin bzw. in radiale Richtung verkleinert ist im Vergleich zum in Richtung Plattform 4 weisenden bzw. dem auf der der Koppeleinheit 8 zugewandten Hälfte des Flugkörperrumpfes 14 angeordneten Flügel 16. Für die Erzielung einer solchen Abwinkelung bestehen verschiedene Möglichkeiten, die in den folgenden FIGs beispielhaft dargestellt sind.

FIG 2 zeigt den Flugkörper 2 in einer schematischen Sicht von vorne. Zu sehen ist, dass der Flugkörper 2 vier Flügel 16, 18a aufweist, die X-förmig zueinander angeordnet sind. Zwei der Flügel 16 befinden sich dabei auf der sich symmetrisch um die Koppeleinheit 8 erstreckenden Hälfte des Flugkörperrumpfes 14 und zwei der Flügel 18 sind auf der der Koppeleinheit abgewandten Hälfte des Flugkörperrumpfes 14 angeordnet. Die in einer X-Stellung zueinander angeordneten Flügel 16, 18 sind bezogen auf eine Ebene, die die beiden Hälften des Flugkörperrumpfes 14 bezogen auf Koppeleinheit 8 voneinander trennt, quasi spiegelsymmetrisch angeordnet. Die beiden in einem Tragflug nach oben weisenden bzw. in Richtung der Plattform 4 weisenden Flügel 16 ragen hierbei gerade in Radialrichtung - bezogen auf den Flugkörperrumpf 14 - schräg nach oben, einmal nach links oben und einmal nach rechts oben gemäß der dargestellten Draufsicht. Die im Tragflug tendentiell nach unten gerichteten bzw. von der Plattform 4 weg weisenden Flügel 18a oder genauer gesagt, die auf der der Koppeleinheit 8 abgewandten Hälfte des Flugkörperrumpfes 14 angeordneten Flügel 18a umfassen einen Teil 24, der sich von der Flügelwurzel aus von der Plattform 4 weg, bezogen auf den Flugkörperrumpf 14 in radiale Richtung erstreckt. Weiter weisen die Flügel 18a jeweils einen Teil 22a auf, der mit dem jeweiligen Teil 24 klappbar/knickbar verbunden ist, so dass der Teil 24 in Richtung auf die Plattform 4 zu abgeklappt werden kann. In der in Fig. 2 konkreten Darstellung des Flugkörpers 2 im Tragflug weisen die Teile 24 der beiden Flügel 18a nach radial außen und schräg nach links unten beziehungsweise rechts unten und bei beiden Flügeln 18a ist der Teil 22a relativ zum Teil 24 nach oben abgeknickt.

Während eines Tragflugs, bei dem der Flugkörper 2 unter der Plattform 4 hängt, wird der Flugkörper 2 an der Koppeleinheit 8 ausgeklinkt und fällt - unter Vernachlässigung von aerodynamischen Störungen - im Wesentlichen im freien Fall nach unten. Vor, bei oder nach diesem Abwurf, der mit dem Moment des Ausklinkens beginnt, wird das Verschlusselement vor dem Lufteinlass 12 abgesprengt, sodass Luft zum Turbinentriebwerk 10 gelangt. Das Turbinentriebwerk 10 wird durch die einströmende Luft beschleunigt und kann bei ausreichender Drehzahl gestartet werden. Schub erreicht das Turbinentriebwerk 10 jedoch erst nach dem Abwurf, so dass der Flugkörper 2 zunächst - schwerkraftbedingt - nach unten fällt.

FIG 3 zeigt den Flugkörper 2 in ausgeklinkter Stellung bzw. nach Abwurf / Freigabe von der fliegenden Plattform 4 und im freien Eigenflug. Die nach unten gerichteten Flügel 18a oder genauer gesagt die ehemals im Tragflug abgeklappten Teile 22a sind ausgeklappt und vollständig gerade in einer radialen Richtung ausgerichtet, symmetrisch zu den beiden oberen Flügeln 16. Die Ausdehnung der Flügel 18a in radialer Richtung im Eigenflug entspricht damit der Ausdehnung der Flügel 16 in radialer Richtung, deren Ausdehung beim Übergang vom Tragflug in den Eigenflug unverändert geblieben ist. Die Größe der Flügel 16, 18 zumindest bezogen auf die radiale Länge ist damit gleich. Das Turbinentriebwerk 10 hat Schub entfaltet, und der Flugkörper 2 steuert mithilfe einer Steuereinheit die Aktuatoren der Ruder 20 an und hierdurch bevorzugt auf ein Ziel zu.

Bei den Figuren 2 und 3 sind im Flugkörper 2 der Masse-Schwerpunkt 26 und der laterale Flächen-Schwerpunkt 28 eingezeichnet. Es ist zu sehen, dass der Flächen-Schwerpunkt 28 in FIG 3 unterhalb des Masse-Schwerpunkts 26 liegt. Das liegt an der Ausrichtung des Lufteinlasses 12 nach unten, der den Flächen-Schwerpunkt 28 mehr nach unten zieht als den Masse-Schwerpunkt 26. Wird der Flugkörper 2 in einer wie in FIG 3 gezeigten Konfiguration von der Plattform 4 abgeworfen, also aus der Aufhängung 6 ausgeklinkt oder anderweitig von der Plattform 4 freigegeben, so ergibt sich eine instabile aerodynamische Konfiguration, da der Flächen-Schwerpunkt 28 unterhalb des Masse-Schwerpunkts 26 liegt. Gerade bei Flugzeugen herrscht während des Tragflugs eine asymmetrische Anströmung des Flugkörpers 2 von der Seite, die eine Rollkraft auf den Flugkörper 2 bewirkt. Eine solche asymmetrische Anströmung verursacht direkt nach dem Abwurf und in noch unmittelbarer Nähe zur Plattform 4 eine Rollbewegung, durch die die oberen Flügel 16 tangential zum Rumpf der Plattform 4 gezogen werden. Eine solche beginnende Rollbewegung verbunden mit der tiefen Anordnung des Flächen-Schwerpunkts 28 kann zu einer sich schnell vergrößernden Rollbewegung des Flugkörpers 2 führen, sodass eine Gefahr des Anstoßens des Flugkörpers 2 an der Plattform 4 besteht. Außerdem rollt der Lufteinlass 12 nach oben, wo bedingt durch den Fall des Flugkörpers 2 ein Unterdruck herrscht. Es gelangt zu wenig Verbrennungsluft in das Turbinentriebwerk 10, sodass dieses gegebenenfalls nicht gestartet werden kann.

Bei der in FIG 2 dargestellten Konfiguration des Flugkörpers 2 im Tragflug mit abgeklappten unteren Flügeln 18a liegt der Flächen-Schwerpunkt 28 oberhalb des Masse-Schwerpunkts 26. Bei Abwurf ergibt sich aerodynamisch eine stabilere Konfiguration. Zwar besteht durch die asymmetrische Anströmung von der Seite eine anfängliche Rollbewegung des Flugkörpers 2 bei Abwurf fort, doch diese wird durch den tiefen Masse-Schwerpunk 26 stabilisiert, sodass der Lufteinlass 12 stabil nach unten weisend ausgerichtet bleibt. Das Turbinentriebwerk 10 kann zuverlässig gestartet werden und der Flugkörper 2 kann selbständig im Eigenflug ein Ziel ansteuern.

Das Anheben des Flächen-Schwerpunkts 28 über den Masse-Schwerpunkt 26 wird durch die verkleinerte Ausdehnung der nach unten weisenden bzw. der auf der der Koppeleinheit 8 abgewandten Hälfte des Flugkörperrumpfes 14 angeordneten Flügel 18 in radiale Richtung erreicht, durch die ein Luftwiderstand der Flügel 18 bei einem Anströmen von unten gegenüber einer Eigenflugstellung verringert ist, beispielsweise um zumindest 30%, insbesondere um zumindest 50%. Beim Fallen nach unten ist der Flugkörper 2 an seinen auf der der Koppeleinheit 8 abgewandten Hälfte des Flugkörperrumpfes 14 angeordneten Flügeln 18a einem erheblich geringeren Luftwiderstand ausgesetzt als in der in FIG 3 gezeigten Konfiguration, sodass die aerodynamische Konfiguration des Flugkörpers 2 stabil ist. Die äußeren Störeinwirkungen bewirken zwar eine Auslenkung des Flugkörpers 2 in der Rollachse, aber durch das stabile Rollverhalten ergibt sich ein inhärentes Zurückdrehen des Flugkörpers 2 in die nominale Lage, in der der Lufteinlass 12 unten und die Aufhängung 8 nach oben weisend positioniert ist.

Um eine agile Flugsteuerung des Flugkörpers 2 im Eigenflug zu erreichen, sollten die unteren Flügel 18 in die radial ausgerichtete Konfiguration, insbesondere eine X-Konfiguration, gebracht werden, die in FIG 3 dargestellt ist. Hierzu umfasst jeder der beiden Flügel 18 einen Aktuator 30, der eine Bewegung des Teils 22 des jeweiligen Flügels 18 von der Tragflugstellung, die beispielsweise in FIG 2 dargestellt ist, in die Eigenflugstellung bewirkt, die in FIG 3 dargestellt ist.

FIG 4 zeigt den Aktuator 30 innerhalb des die Flügelwurzel umfassenden Teils 24 eines nach unten weisenden bzw. eines auf der der Koppeleinheit 8 abgewandten Hälfte des Flugkörperrumpfes 18 angeordneten Flügels 18. Der Aktuator 30 umfasst einen pneumatischen Motor mit einem Kolben 32, der eine Ausformung 34 aufweist, die in eine Kulisse 36 einragt. Die Kulisse 36 ist in FIG 4 lediglich schematisch dargestellt. Der Aktuator 30 ist rumpffest im Flugkörper 2, also fest mit dem Teil 24 verbunden. Die Kulisse 36 hingegen ist fest mit dem Teil 22, welches die Flügelspitze umfasst, verbunden. Auch eine Vertauschung ist möglich.

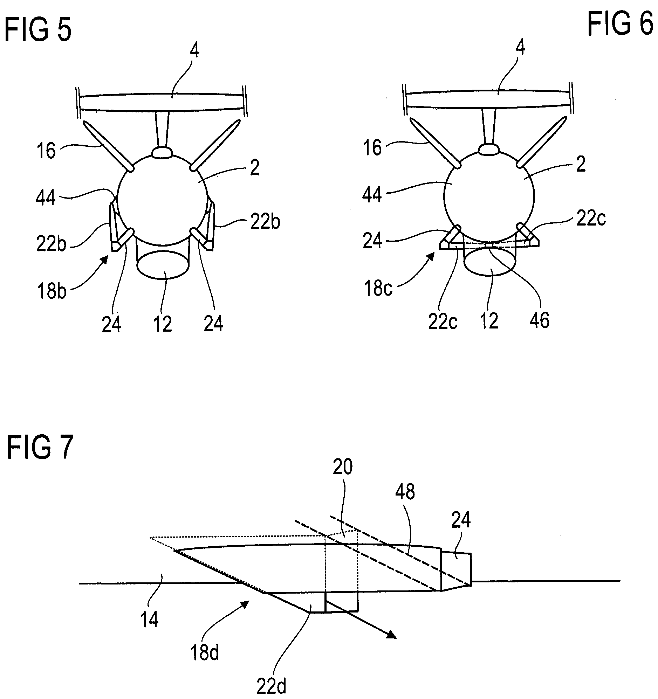

Bei dem in FIG 4 dargestellten Zustand ist der Teil 22 des Flügels 18 in seiner Eigenflugstellung, also im ausgeklappten Zustand. Der Kolben 32 ist ausgefahren, sodass sich seine Ausformung 34 durch die Kulisse 36 bewegt hat und den Teil 22 hierdurch von seiner Tragflugstellung, die in FIG 2 oder in FIG 5 oder FIG 6 dargestellt ist, in seine Eigenflugstellung, die in FIG 3 und FIG 4 dargestellt ist, bewegt hat. Der Kolben 32 wird hierbei durch den Aktuator 30 in Axialrichtung gedrückt, beispielsweise nach hinten, wie in FIG 4 durch den Pfeil angedeutet ist. Der Aktuator 30 ist ein pneumatischer Aktuator 30, der mit Hilfe von Gasdruck den Kolben 32 aus einer Ausgangsposition drückt. Der Gasdruck kann durch Anstich einer Gaspatrone erzeugt werden.

Bei dem in FIG 4 dargestellten Ausführungsbeispiel umfasst der Aktuator 30 eine Pyroeinheit 38, deren Zündung durch ein mechanisches Verzögerungsglied 40 verursacht wird. Das mechanische Verzögerungsglied 40 umfasst ein Uhrwerk, das über einen vorbestimmten Zeitraum von einer Anfangstellung in einer Endstellung läuft. In der Endstellung wird ein federgetriebener Anstichbolzen freigegeben, der die Pyroeinheit 38 ansticht und hierdurch zündet. Das Uhrwerk des Verzögerungsglieds 40 läuft rein mechanisch ab, sodass auch bei einer Störung einem zu schnellen Ablaufen und damit einem zu schnellen Ausklappen der nach unten gerichteten Flügel 18 bzw. der Teile 22 entgegengewirkt wird.

Das Verzögerungsglied 40 wird bei Abwurf des Flugkörpers 2 in Gang gesetzt, beispielsweise durch eine mechanische oder durch eine elektronische Steuereinheit 42. Die Verzögerungszeit, um die das Verzögerungsglied 40 den Start des Aktuators 30 verzögert, ist so eingestellt, dass der Flugkörper 2 nach seinem Abwurf von der Plattform 4 einen vorbestimmten Sicherheitsabstand von der Plattform 4 durch das Hinabfallen erreicht hat, bevor die nach unten weisenden Flügel 18 in ihre Eigenflugstellung bewegt werden. Hierdurch kann ein Anschlagen des Flugkörpers 2 an der Plattform 4 vermieden und auch das Turbinentriebwerk 10 durch den stets nach unten weisenden Lufteinlass 12 zuverlässig gestartet werden.

Zwei weitere Beispiele von Tragflugstellungen von nach unten weisenden bzw. auf der einer Koppeleinheit 8 abgewandten Hälfte eine Flugkörperrumpfes angeordneten Flügeln 18 eines Flugkörpers 2 sind in den FIGs 5 und 6 dargestellt. Die nachfolgende Beschreibung beschränkt sich im Wesentlichen auf die Unterschiede zum Ausführungsbeispiel in den Figuren 1 bis 4, auf das bezüglich gleichbleibender Merkmale und Funktionen verwiesen wird. Um nicht bereits Beschriebenes mehrfach ausführen zu müssen, werden generell alle Merkmale eines vorangegangenen Ausführungsbeispiels im jeweils folgenden Ausführungsbeispiel übernommen, ohne dass sie erneut beschrieben sind, es sei denn, Merkmale sind als Unterschiede zu den vorangegangenen Ausführungsbeispielen beschrieben.

Bei den Flugkörpern 2 aus FIG 5 sind die beiden nach unten weisenden bzw. auf der der Koppeleinheit 8 abgewandten Hälfte des Flugkörperrumpfes 14 angeordneten Flügel 18b ebenfalls abknickbar bzw. klappbar ausgelegt und sind in FIG 5 in ihrer Tragflugstellung gezeigt. Die die Flügelspitze umfassenden Teile 22b sind in der Tragflugstellung nach oben, in Richtung auf die Plattform 4 zu ausgerichtet, insbesondere zumindest weitgehend senkrecht nach oben. Sie sind jeweils nach oben, auf die Plattform 4 zu, abgeklappt und mit einem Befestigungselement 44 am Rumpf 14 des Flugkörpers 2 befestigt. Beim Abwurf des Flugkörpers 2 können die Befestigungselemente 44 beispielsweise durch Absprengung gelöst werden, sodass die jeweiligen Teile 22b freigegeben sind zum Schwenken in ihre Eigenflugstellung. Die Bewegung von der Tragflugstellung in die Eigenflugstellung kann wie oben beschrieben erfolgen.

Bei dem in FIG 6 gezeigten Ausführungsbeispiel sind die Teile 22c der beiden Flügel 18c aufeinander zu geklappt und mit einem Befestigungselement 46 aneinander befestigt. Die Teile 22c sind aufeinander zu ausgerichtet, insbesondere zumindest im Wesentlichen waagerecht, verlaufen also im Wesentlichen parallel zur Plattform 4. Aus FIG 1 ist ersichtlich, dass die äußeren Teile 22c von vorne gesehen hinter dem Lufteinlass 12 angeordnet sind, was in FIG 6 durch ihre gestrichelte Darstellung angedeutet ist. Auch das Befestigungselement 46 kann gelöst bzw. abgeworfen werden, beispielsweise durch eine Absprengung, vorzugsweise beim Abwurf des Flugkörpers 2 von der Plattform 4. Alternativ oder zusätzlich ist es möglich, dass die Teile 22c am Rumpf 14 des Flugkörpers 2 befestigt sind, beispielsweise mit dem Befestigungselement 46 oder jeweils mit einem weiteren Element. Durch die Befestigungselemente 44, 46 können die äußeren bzw. die die Flügelspitze umfassenden Teile 22b, 22c während des Tragflugs und auch während eines Transports zur Plattform 4 vor der Montage an dieser sicher gehalten werden, sodass die Gelenke oder Scharniere zwischen den beiden Teilen 22, 24 geschont werden.

Bei dem in FIG 7 dargestellten Ausführungsbeispiel ist der von der Flügelwurzel abgewandte bzw. der die Flügelspitze umfassende Teil 22d des nach unten weisenden Flügels 18d teilweise innerhalb des die Flügelwurzel umfassenden Teils 24 des Flügels 18d angeordnet, wie in FIG 7 dargestellt ist. In dieser Tragflugstellung schaut nur die radial äußere Spitze, also die Flügelspitze des Teils 22d aus dem die Flügelwurzel umfassenden Teil 24 heraus. Zum Bewegen des Flügels 18d von seiner Tragflugstellung in seine Eigenflugstellung wird der Teil 22d nach radial außen - unter Umständen auch mit einer Bewegungskomponente in Axialrichtung, beispielsweise nach hinten, wie in FIG 7 dargestellt ist - aus dem Teil 24 herausbewegt. Dies geschieht beispielsweise durch eine Führung 48, die eine Kulisse oder eine andere mechanische Bahn umfassen kann, an der der äußere Teil 22d entlang geführt und damit aus dem Teil 24 heraus gefahren wird. Die Bewegungsenergie kann durch einen Aktuator erzeugt werden, beispielsweise wie zur FIG 4 beschrieben ist.

Generell rastet der Teil 22 in seiner Eigenflugstellung mit Hilfe von einem oder mehreren Rastelementen ein, sodass ein Zurückbewegen in die Tragflugstellung durch die Verrastung mechanisch blockiert ist. Dies gilt für alle äußeren, insbesondere die Flügelspitze umfassenden Teile 22 der Flugkörper 2.

### Bezugszeichenliste

- 2: Flugkörper
- 4: Plattform
- 6: Aufhängung
- 8: Koppeleinheit
- 10: Turbinentriebwerk
- 12: Lufteinlass
- 14: Flugkörperrumpf
- 16: Flügel
- 18a-d: Flügel
- 20: Ruder
- 22a-d: Teil
- 24: Teil
- 26: Masse-Schwerpunkt
- 28: Flächen-Schwerpunkt
- 30: Aktuator
- 32: Kolben
- 34: Ausformung
- 36: Kulisse
- 38: Pyroeinheit
- 40: Verzögerungsglied
- 42: Steuereinheit
- 44: Befestigungselement
- 46: Befestigungselement
- 48: Führung

## Patentansprüche

1. Verfahren zum Abwerfen eines Flugkörpers (2) von einer fliegenden Plattform (4), bei dem:
a) der Flugkörper (2) während eines Tragflugs über eine am Flugkörperrumpf (14) befindliche Koppeleinheit (8) mit einer an der Unterseite der fliegenden Plattform (4) befindlichen Aufhängung (6) verbunden ist und unter der fliegenden Plattform (4) hängt,
b) während des Tragflugs zumindest ein auf der der Koppeleinheit (8) abgewandten Hälfte des Flugkörperrumpfes (14) angeordneter erster Flügel (18) in einer Tragflugstellung gehalten wird, in welcher seine Ausdehnung in radialer Richtung kleiner ist als diejenige zumindest eines auf der der Koppeleinheit (8) zugeordneten Hälfte des Flugkörperrumpfes (14) angeordneten zweiten Flügels (16), so dass der laterale Flächen-Schwerpunkt (28) des Flugkörpers (2) über dessen Masse-Schwerpunkt (26) liegt,
c) der Flugkörper (2) von der fliegenden Plattform (4) durch Ausklinken der Koppeleinheit (8) aus der Aufhängung (6) abgeworfen wird und
d) der Flugkörper (2) nach dem Abwurf den ersten Flügel (18) aus der Tragflugstellung in eine Eigenflugstellung bewegt, in welcher seine Ausdehnung in radialer Richtung derjenigen des in seiner Größe unverändert gebliebenen zweiten Flügels (16) entspricht, so dass der laterale Flächen-Schwerpunkt (28) des Flugkörpers (2) unterhalb des Masse-Schwerpunkts (26) liegt.

2. Verfahren nach Anspruch 1,
**dadurch gekennzeichnet,**
**dass** der erste Flügel (18) in der Tragflugstellung zumindest teilweise in Richtung auf die fliegende Plattform (4) zu abgeklappt ist oder zumindest teilweise im Wesentlichen parallel zur fliegenden Plattform (4) abgeklappt ist.

3. Verfahren nach Anspruch 1 oder 2,
**dadurch gekennzeichnet,**
**dass** ein von der Flügelwurzel abgewandter Teil (22) des ersten Flügels (18) in der Tragflugstellung am Rumpf (14) des Flugkörpers (2) befestigt ist.

4. Verfahren nach Anspruch 1,
**dadurch gekennzeichnet,**
**dass** das Bewegen von der Tragflugstellung in die Eigenflugstellung durch ein Ausfahren zumindest eines Teils (22d) des ersten Flügels (18d) nach radial außen erfolgt.

5. Verfahren nach Anspruch 4,
**dadurch gekennzeichnet,**
**dass** der zumindest eine ausfahrbare Teil (22d) in der Tragflugstellung zumindest teilweise innerhalb eines rumpfnäheren Teils (24) des ersten Flügels (18d) angeordnet ist und zur Vergrößerung der radialen Ausdehnung aus diesem zumindest teilweise herausfährt.

6. Verfahren nach einem der vorhergehenden Ansprüche,
**dadurch gekennzeichnet,**
**dass** der erste Flügel (18) von der Tragflugstellung in die Eigenflugstellung bewegt wird, indem ein im Flugkörperrumpf (14) befindliches Rumpfelement und ein im oder am Flügel (18) befindliches Flügelelement (32) eines Antriebs (30) relativ zueinander in einer Kulisse (36) bewegt werden.

7. Verfahren nach einem der vorhergehenden Ansprüche,
**dadurch gekennzeichnet,**
**dass** der erste Flügel (18) nach dem Abwurf des Flugkörpers (2) eine vorbestimmte Zeitdauer in der Tragflugstellung verbleibt und nach Ablauf dieser Zeitdauer die Bewegung in die Eigenflugstellung gestartet wird.

8. Verfahren nach einem der vorhergehenden Ansprüche,
**dadurch gekennzeichnet,**
**dass** ein Prozess, der die Bewegung des ersten Flügels (18) in die Eigenflugstellung bewirkt, mit dem Abwurf gestartet wird und durch ein mechanisches Verzögerungsglied (40) so lange verzögert wird, dass der erste Flügel (18) die Eigenflugstellung erst erreicht, wenn der Flugkörper (2) einen vorgegebenen Abstand zur fliegenden Plattform (4) erreicht hat.

9. Verfahren nach einem der vorhergehenden Ansprüche,
**dadurch gekennzeichnet,**
**dass** die mechanische Energie zum Bewegen des ersten Flügels (18) von der Tragflugstellung in die Eigenflugstellung von einer Pyroeinheit (38) erzeugt wird, deren Zündung durch ein mechanisches Verzögerungsglied (40) eine vorbestimmte Zeitdauer verzögert wird.

10. Verfahren nach einem der vorhergehenden Ansprüche,
**dadurch gekennzeichnet,**
**dass** der Flugkörper (2) nach dem Abwurf von der fliegenden Plattform (4) ein vorbestimmtes Rollmanöver fliegt, durch das das Bewegen des ersten Flügels (18) von der Tragflugstellung in die Eigenflugstellung aerodynamisch begünstigt wird.

11. Verfahren nach einem der vorhergehenden Ansprüche,
**dadurch gekennzeichnet,**
**dass** der Flugkörper (2) vier Flügel (16, 18) in X-Stellung aufweist und nach Abwurf des Flugkörpers (2) von der fliegenden Plattform (4) die beiden auf der der Koppeleinheit (8) abgewandten Hälfte des Flugkörperrumpfes (14) angeordneten ersten Flügel (18) von der Tragflugstellung in die Eigenflugstellung bewegt, in welcher ihre Ausdehnung in radialer Richtung derjenigen der auf der der Koppeleinheit (8) zugeordneten Hälfte des Flugkörpers angeordneten, in ihrer Größe unverändert gebliebenen zweiten Flügel (16) entspricht.

12. Verfahren nach Anspruch 11,
**dadurch gekennzeichnet,**
**dass** die beiden ersten Flügel (18c) in der Tragflugstellung aneinander befestigt sind.

13. Verfahren nach einem der vorhergehenden Ansprüche,
**dadurch gekennzeichnet,**
**dass** vor oder nach dem Abwurf des Flugkörpers (2) von der fliegenden Plattform (4) ein Turbinentriebwerk (10) des Flugkörpers (2) gestartet wird, zu dessen Betrieb Luft von einem auf der der Koppeleinheit abgewandten Hälfte des Flugkörperrumpfes (14) befindlichen, nach unten gerichteten Lufteinlasses (12) eingesaugt und der Turbine des Turbinentriebwerks (10) zugeleitet wird.

14. Flugkörper (2) mit einer Koppeleinheit (8) zum Verbinden und Halten des Flugkörpers (2) an einer an der Unterseite einer fliegenden Plattform (4) befindlichen Aufhängung (6) während eines Tragflugs, einem Rudersystem mit zumindest einem auf der der Koppeleinheit (8) abgewandten Hälfte des Flugkörperrumpfes (14) angeordneten ersten Flügel (18) und zumindest einem auf der der Koppeleinheit (8) zugeordneten Hälfte des Flugkörperrumpfes (14) angeordneten zweiten Flügel (16) und einem Ausfahrsystem mit zumindest einem Aktuator (30) und einer Steuereinheit (42), die dazu eingerichtet ist, den Aktuator (30) derart anzusteuern, dass eine Aktuatorbewegung eine Bewegung des ersten Flügels (18) aus einer Tragflugstellung, in welcher seine Ausdehnung in radialer Richtung kleiner ist als diejenige des zweiten Flügels (16), so dass der laterale Flächen-Schwerpunkt (28) des Flugkörpers (2) über dessen Masse-Schwerpunkt (26) liegt, in eine Eigenflugstellung bewirkt, in der seine Ausdehnung in radialer Richtung derjenigen des in seiner Größe unverändert gebliebenen zweiten Flügels (16) entspricht, so dass der laterale Flächen-Schwerpunkt (28) des Flugkörpers (2) unterhalb des Masse-Schwerpunkts (26) liegt.

## Claims

1. Method for jettisoning a missile (2) from an airborne platform (4), in which method:
a) the missile (2) during a carried flight by way of a coupling unit (8) that is situated on the missile hull (14) is connected to a suspension (6) that is situated on the lower side of the airborne platform (4) and is suspended below the airborne platform (4);
b) an at least first wing (18) that is disposed on the half of the missile hull (14) that faces away from the coupling unit (8) during the carried flight is held in a carried-flight position in which the extent of said first wing (18) in the radial direction is smaller than the same extent of at least a second wing (16) that is disposed on the half of the missile hull (14) that is assigned to the coupling unit (8), such that the lateral centroid of area (28) of the missile (2) lies above the centre of mass (26) of said missile (2) ;
c) the missile (2) is jettisoned from the airborne platform (4) by unlatching the coupling unit (8) from the suspension (6); and
d) the missile (2) after jettisoning moves the first wing (18) from the carried-flight position to an autonomous-flight position in which the extent of said first wing (18) in the radial direction corresponds to the same extent of the second wing (16) that remains unmodified in terms of the size thereof, such that the lateral centroid of area (28) of the missile (2) lies below the centre of mass (26).

2. Method according to Claim 1,
**characterized in that**
the first wing (18) in the carried-flight position is at least in part folded inward in the direction toward the airborne platform (4), or is at least in part folded inward so as to be substantially parallel with the airborne platform (4).

3. Method according to Claim 1 or 2,
**characterized in that**
a part (22) of the first wing (18) that faces away from the wing root in the carried-flight position is fastened to the hull (14) of the missile (2).

4. Method according to Claim 1,
**characterized in that**
the movement from the carried-flight position to the autonomous-flight position is performed by deploying at least one part (22d) of the first wing (18d) in a radially outward manner.

5. Method according to Claim 4,
**characterized in that**
the at least one deployable part (22d) in the carried-flight position is at least in part disposed within a hull-proximal part (24) of the first wing (18d) and, for increasing the radial extent, is at least in part deployed out of said hull-proximal part (24).

6. Method according to one of the preceding claims,
**characterized in that**
the first wing (18) is moved from the carried-flight position to the autonomous-flight position **in that** a hull element that is situated in the missile hull (14), and a wing element (32) of a drive (30) that is situated in or on the wing (18), are moved relative to one another in a gate guide (36).

7. Method according to one of the preceding claims,
**characterized in that**
the first wing (18) after jettisoning the missile (2) remains in the carried-flight position for a predetermined temporal period, and the movement to the autonomous-flight position is started after said temporal period has elapsed.

8. Method according to one of the preceding claims,
**characterized in that**
a process which causes the movement of the first wing (18) to the autonomous-flight position is started with the jettison and by way of a mechanical delaying member (40) is delayed until the first wing (18) reaches the autonomous-flight position only once the missile (2) has reached a predefined distance from the airborne platform (4).

9. Method according to one of the preceding claims,
**characterized in that**
the mechanical energy for moving the first wing (18) from the carried-flight position to the autonomous-flight position is generated by a pyrotechnical unit (38), the ignition of said pyrotechnical unit (38) being delayed by a predetermined temporal period by way of a mechanical delaying member (40).

10. Method according to one of the preceding claims,
**characterized in that**
the missile (2) after jettisoning from the airborne platform (4) performs a predetermined roll flight manoeuvre by way of which the movement of the first wing (18) from the carried-flight position to the autonomous-flight position is aerodynamically facilitated.

11. Method according to one of the preceding claims,
**characterized in that**
the missile (2) has four wings (16, 18) in a cruciform position, and after jettisoning the missile (2) from the airborne platform (4) moves the two first wings (18) that are disposed on the half of the missile hull (14) that faces away from the coupling unit (8) from the carried-flight position to the autonomous-flight position in which the extent of said first wing (18) in the radial direction corresponds to the same extent of the second wing (16) that remains unmodified in terms of the size thereof, said second wings (18) being disposed on the half of the missile that is assigned to the coupling unit (8).

12. Method according to Claim 11,
**characterized in that**
the two first wings (18c) in the carried-flight position are fastened to one another.

13. Method according to one of the preceding claims,
**characterized in that**
a turbine power plant (10) of the missile (2) is started before or after jettisoning the missile (2) from the airborne platform (4), air for the operation of said turbine power plant (10) being suctioned by a downwardly directed air inlet (12) that is situated on the half of the missile hull (14) that faces away from the coupling unit, and said air being supplied to the turbine of the turbine power plant (10).

14. Missile (2) having a coupling unit (8) for connecting and holding the missile (2) on a suspension (6) that is situated on the lower side of an airborne platform (4) during a carried flight, a rudder system having at least one first wing (18) that is disposed on the half of the missile hull (14) that faces away from the coupling unit (8), and at least one second wing (16) that is disposed on the half of the missile hull (14) that is assigned to the coupling unit (8), and a deployment system having at least one actuator (30) and one control unit (42) which is specified for actuating the actuator (30) in such a manner that an actuator movement causes a movement of the first wing (18) from a carried-flight position, in which the extent of said first wing (18) in the radial direction is smaller than the same extent of the second wing (16), such that the lateral centroid of area (28) of the missile (2) lies above the centre of mass (26) of said missile (2), to an autonomous-flight position in which the extent of said first wing (18) in the radial direction corresponds to the same extent of the second wing (16) that remains unmodified in terms of the size thereof, such that the lateral centroid of area (28) of the missile (2) lies below the centre of mass (26).

## Revendications

1. Procédé pour larguer un missile (2) depuis une plate-forme volante (4), avec lequel :
a) pendant un vol de transport, le missile (2) est relié, par le biais d'une unité de couplage (8) qui se trouve au niveau du fuselage du missile (14), à une suspension (6) qui se trouve au niveau du côté inférieur de la plate-forme volante (4) et est suspendu sous la plate-forme volante (4),
b) pendant le vol de transport, au moins une première aile (18) disposée sur la moitié du fuselage du missile (14) à l'opposé de l'unité de couplage (8) est maintenue dans une position de vol de transport, dans laquelle sa dimension dans la direction radiale est plus petite que celle d'au moins une deuxième aile (16) disposée sur la moitié du fuselage du missile (14) associée à l'unité de couplage (8), de sorte que le centre de gravité des surfaces latérales (28) du missile (2) se trouve au-dessus de son centre de gravité des masses (26),
c) le missile (2) est largué de la plate-forme volante (4) par déverrouillage de l'unité de couplage (8) hors de la suspension (6) et
d) le missile (2), après le largage, déplace la première aile (18) de la position de vol de transport dans une position de vol autonome, dans laquelle sa dimension dans la direction radiale correspond à celle, de la deuxième aile (16) dont la taille reste inchangée, de sorte que le centre de gravité des surfaces latérales (28) du missile (2) se trouve au-dessous du centre de gravité des masses (26).

2. Procédé selon la revendication 1, **caractérisé en ce que** dans la position de vol de transport, la première aile (18) est rabattue au moins partiellement en direction de la plate-forme volante (4) ou rabattue au moins partiellement sensiblement en parallèle à la plate-forme volante (4).

3. Procédé selon la revendication 1 ou 2, **caractérisé en ce qu'**une partie (22) à l'opposé de la racine de l'aile de la première aile (18), dans la position de vol de transport, est fixée au fuselage (14) du missile (2).

4. Procédé selon la revendication 1, **caractérisé en ce que** le déplacement de la position de vol de transport dans la position de vol autonome est effectué par un déploiement d'au moins une partie (22d) de la première aile (18d) dans le sens radial vers l'extérieur.

5. Procédé selon la revendication 4, **caractérisé en ce que** dans la position de vol de transport, l'au moins une partie (22d) pouvant être déployée est disposée au moins partiellement à l'intérieur d'une partie (24) plus proche du fuselage de la première aile (18d) et sort au moins partiellement hors de celle-ci en vue d'agrandir la dimension radiale.

6. Procédé selon l'une des revendications précédentes, **caractérisé en ce que** la première aile (18) est déplacée de la position de vol de transport dans la position de vol autonome en déplaçant un élément de fuselage qui se trouve dans le fuselage du missile (14) et un élément d'aile (32) d'un mécanisme d'entraînement (30) qui se trouve dans ou sur l'aile (18) relativement l'un par rapport à l'autre dans une coulisse (36).

7. Procédé selon l'une des revendications précédentes, **caractérisé en ce qu'**après le largage du missile (2) la première aile (18) reste pendant une durée prédéterminée dans la position de vol de transport et le déplacement dans la position de vol autonome commence après l'écoulement de cette durée.

8. Procédé selon l'une des revendications précédentes, **caractérisé en ce qu'**un processus qui produit le déplacement de la première aile (18) dans la position de vol autonome commence avec le largage et est retardé par un élément de retard mécanique (40) de sorte que la première aile (18) n'atteint la position de vol autonome qu'une fois que le missile (2) a atteint un écart prédéfini par rapport à la plate-forme volante (4).

9. Procédé selon l'une des revendications précédentes, **caractérisé en ce que** l'énergie mécanique destinée à déplacer la première aile (18) de la position de vol de transport dans la position de vol autonome est produite par une unité pyrotechnique (38) dont l'allumage est retardé d'une durée prédéterminée par un élément de retard mécanique (40).

10. Procédé selon l'une des revendications précédentes, **caractérisé en ce qu'**après le largage depuis la plate-forme volante (4), le missile (2) réalise en vol une manoeuvre de roulis prédéterminée par laquelle le déplacement de la première aile (18) de la position de vol de transport dans la position de vol autonome est favorisé de manière aérodynamique.

11. Procédé selon l'une des revendications précédentes, **caractérisé en ce que** le missile (2) possède quatre ailes (16, 18) en position X et, après le largage du missile (2) depuis la plate-forme volante (4), déplace les deux premières ailes (18) disposées sur la moitié du fuselage du missile (14) à l'opposé de l'unité de couplage (8) de la position de vol de transport dans la position de vol autonome, dans laquelle leur dimension dans la direction radiale correspond à celle des deuxièmes ailes (16), dont la taille reste inchangée, disposées sur la moitié du missile associée à l'unité de couplage (8).

12. Procédé selon la revendication 11, **caractérisé en ce que** les deux premières ailes (18c) sont fixées l'une à l'autre dans la position de vol de transport.

13. Procédé selon l'une des revendications précédentes, **caractérisé en ce qu'**avant ou après le largage du missile (2) de la plate-forme volante (4), un groupe turbopropulseur (10) du missile (2) est démarré, pour le fonctionnement duquel de l'air est aspiré depuis une entrée d'air (12) orientée vers le bas, qui se trouve sur la moitié du fuselage du missile (14) à l'opposé de l'unité de couplage, puis acheminé à la turbine du groupe turbopropulseur (10).

14. Missile (2) comprenant une unité de couplage (8) destinée à connecter le missile (2) à une suspension (6) qui se trouve au niveau du côté inférieur d'une plate-forme volante (4) et à le maintenir sur celle-ci pendant un vol de transport, un système de fuselage comprenant au moins une première aile (18) disposée sur la moitié du fuselage du missile (14) à l'opposé de l'unité de couplage (8) et au moins une deuxième aile (16) disposée sur la moitié du fuselage du missile (14) associée à l'unité de couplage (8) et un système de déploiement comprenant au moins un actionneur (30) et une unité de commande (42), laquelle est conçue pour piloter l'actionneur (30) de telle sorte qu'un mouvement de l'actionneur produise un déplacement de la première aile (18) depuis une position de vol de transport, dans laquelle sa dimension dans la direction radiale est plus petite que celle de la deuxième aile (16), de sorte que le centre de gravité des surfaces latérales (28) du missile (2) se trouve au-dessus de son centre de gravité des masses (26), dans une position de vol autonome, dans laquelle sa dimension dans la direction radiale correspond à celle de la deuxième aile (16), dont la taille reste inchangée, de sorte que le centre de gravité des surfaces latérales (28) du missile (2) se trouve au-dessous du centre de gravité des masses (26).
